# EUROPÄISCHE PATENTSCHRIFT

(11) **EP 3 413 459 B1**
(45) Veröffentlichungstag und Bekanntmachung des Hinweises auf die Patenterteilung: **08.09.2021**
(21) Anmeldenummer: 18186283.0
(22) Anmeldetag: 12.05.2010
(51) Int. Cl.: H02P 8/08, H02P 8/34, H02P 8/36

(54) **VERFAHREN ZUR BLOCKIERERKENNUNG VON ELEKTRISCH KOMMUTIERTEN ELEKTROMOTOREN**
METHOD FOR DETECTING A BLOCKAGE OF ELECTRICALLY COMMUTATED ELECTRIC MOTORS
PROCÉDÉ DE DÉTECTION DE BLOCAGE DES MOTEURS ÉLECTRIQUES À COMMUTATION ÉLECTRIQUE

(30) Priorität: 13.05.2009 DE 102009021205
(43) Veröffentlichungstag der Anmeldung: 12.12.2018
(62) Teilanmeldung aus: 10719942.4
(73) Patentinhaber: Elmos Semiconductor SE, 44227 Dortmund (DE)
(72) Erfinder: Hartzsch, Jörg, 44227 Dortmund (DE)
(74) Vertreter: dompatent von Kreisler Selting Werner - Partnerschaft von Patent- und Rechtsanwälten mbB

(56) Entgegenhaltungen:
- EP-A1- 1 460 757
- US-A1- 2006 049 791
- US-A1- 2008 224 639
- US-B1- 6 285 156

## Beschreibung

Die Erfindung betrifft ein Verfahren zur Erkennung eines Hinweises auf eine mögliche Blockierung für elektrisch kommutierte Elektromotoren verschiedenster Typen und Wicklungsanzahl und insbesondere von Schrittmotoren unipolaren und bipolaren Typs sowie von 3-phasigen Schrittmotoren.

Zur Positionsbestimmung von mit Schrittmotoren angetriebenen Systemen sind nach dem Stand der Technik verschiedene Möglichkeiten bekannt. Man kann beispielsweise die Position des angetriebenen Bauteils mittels Absolutwert-Positionssensoren unmittelbar erfassen. Diese Version scheidet jedoch in den meisten Fällen wegen des hohen Material- und Kostenaufwandes aufgrund des Sensors aus.

Die grundsätzlichen Ausführungsformen und Betriebsarten von Schrittmotoren werden beispielsweise in S. Held: "Schrittantriebe", in: Industrie, Elektrik und Elektronik, 39. Jg, 1986, Nr. 6, Seiten 58-60, erläutert. Demnach unterscheidet man Unipolar- und Bipolarmotoren. Ferner existieren 3-phasige Schrittmotoren. Beim Unipolarmotor besteht jede Phase des Schrittmotors aus zwei getrennten Wicklungen mit Mittelanzapfung, wobei zum Betrieb jeweils nur eine Teilwicklung erregt wird. Beim Bipolarmotor haben die Phasenwicklungen keine Mittelanzapfungen, sondern werden abwechselnd in beiden Richtungen vom Betriebsstrom durchflossen. Je nachdem, ob zugleich nur eine einzige oder zwei Erregerspulen bestromt werden, spricht man von Ein- oder Zwei-Strang-Bestromung. Bei diesen Bestromungsarten unterscheidet man zwischen Vollschnitt- und Halbschnitt-Ansteuerung mit oder ohne PMW-Modulation mit Microstepping und Sinus-/Trapez- oder dergleichen Nachbildung.

Durch die Eigenschaft von Schrittmotoren, jeweils diskrete Schritte, d. h. Winkelinkremente, auszuführen, kann die Positionsbestimmung einfach dadurch erfolgen, dass von einem räumlich definierten Startpunkt mittels eines elektronischen Zählers die Anzahl der ausgeführten Schritte überwacht, d. h. gezählt wird. Für eine derartige Positionserkennung müssen im Wesentlichen die folgenden Voraussetzungen realisiert werden: Zum einen muss der tatsächliche Startpunkt, in der Regel ein Endanschlag, als Ausgangspunkt der Bewegung erkannt werden und zum anderen muss laufend überwacht werden, ob bei jeder Schritt-Motorwicklungsbestromung tatsächlich ein Schritt ausgeführt worden ist.

Diese beiden Voraussetzungen lassen sich mit externen Sensoren, beispielsweise Endschaltern und Kodierscheiben, kontrollieren, was allerdings aufwendig und kostenintensiv ist. Alternativ sind sensorlose Verfahren zur Schritterkennung bekannt, bei dem der Speisestrom oder die Speisespannung während der Bestromung der Motorwicklungen analysiert wird. Dabei ist es neben einer Schritterkennung auch möglich, eine Blockierung des Ankers des Schrittmotors und damit das Verfahren eines mit dem Anker in Wirkverbindung stehenden Stellglieds gegen einen (Referenz-)Endanschlag (siehe oben) zu erkennen.

Ein Verfahren und eine Vorrichtung zur sensorlosen Bewegungserkennung eines mehrphasigen Schrittmotors ist beispielsweise aus der DE 40 35 970 A1 bekannt. Darin werden die Spannungen zweier Phasen, d. h. die an den Motorwicklungen anliegenden Spannungen, mittels eines Mikrocomputers ausgewertet. Im Einzelnen treten im Blockierfall Spannungseinbrüche bei den Phasenspannungen auf, die registriert werden. Das Verfahren soll zwar gegen Hochfrequenzstörungen unempfindlich sein, weist jedoch eine Reihe anderer Nachteile auf: Die Bewegungserkennung ist nämlich nur an mehrphasigen, unipolaren Schrittmotoren und nicht an bipolaren Schrittmotoren möglich. Außerdem sind die Spannungseinbrüche nur dann messbar, wenn die Stromquelle relativ hochohmig ist; in der Regel müssen also Shunt-Widerstände eingesetzt werden. Dies bedingt natürlich einen erheblichen Bauteileaufwand und zudem eine ungünstige Energiebilanz aufgrund der am Widerstand umgesetzten Verlustwärme.

In der EP-A-0 462 050 ist ebenfalls ein Verfahren und eine Schaltung zum Erfassen des Außertrittfallens eines Schrittmotors beschrieben. Der jeweils durch die Motorwicklungen fließende Strom wird an einem Shunt-Widerstand abgegriffen und ausgewertet. Dabei hat man ebenfalls wie in der vorgenannten Druckschrift die Probleme durch die Verwendung des Shunt-Widerstands. Eine weitere Schwierigkeit ist, dass Strommessungen unter bestimmten Betriebsbedingungen, beispielsweise bei Spannungsschwankungen, wie sie häufig in Bordnetzen von Kraftfahrzeugen auftreten, relativ fehleranfällig sind, was nur durch aufwändige Entstör- und Stabilisierungsmaßnahmen ausgeglichen werden kann.

In der EP-A-0 402 220 und der EP-A-0 574 339 sind weitere Verfahren zur Schritterkennung bei Schrittmotoren erläutert, welche allerdings ebenfalls die vorgenannten Unzulänglichkeiten aufweisen.

Aus der DE-C-38 36 240 und US-B-6 285 156 ist es bekannt, zur Abschätzung des Rotorpositionswinkels jeweils nicht erregten Wicklungen einen Abtastimpuls zuzuführen, der eine Stromänderung in den nicht erregten Phasen verursacht. Durch Auswertung der Zeit des Stromanstieges oder -abfalles werden Induktivitätswerte ermittelt, aus denen die momentane Rotorposition extrapoliert wird.

Die Anwendung des letztgenannten Verfahrens beschränkt sich jedoch auf mehrphasigen Reluktansmotoren und liefert lediglich eine ungefähre Abschätzung.

Aus DE-C-196 53 460 ist ein Verfahren zur sensorlosen Schritterkennung bei Schrittmotoren durch Analyse der Motorbestromung bekannt, wobei während des Betriebs die verschiedenen Motorwicklungsanschlüsse hochohmig geschaltet werden und die Dauer der Antwortsignale an den hochohmig geschalteten Motorwicklungsanschlüssen ausgewertet werden, um zu erkennen, ob sich der Schrittmotor um einen Schritt bewegt hat. Dabei wird in das Bestromungsschema eingegriffen, indem dieses für kurze Zeit verändert wird, und zwar durch Einprägen eines definierten Stroms auf eine zweite Motorwicklung, auf die nach einer Stromrichtungsumkehr der Motorwicklungsbestromung einer ersten Motorwicklung geschaltet wird, und ferner durch Hochohmig-Schalten eines Motorwicklungsanschlusses der zweiten Motorwicklung.

EP-A-1460757 beschreibt einen Bipolar-Schrittmotor mit Geschwindigkeitsermittler mittels Bipolar-Ansteuerung.

Aus US-A-2006/0049791 und US-A-2008/0224639 sind schließlich Verfahren zur Kommutierung und zum Betreiben von Schrittmotoren bekannt.

Aufgabe der Erfindung ist es, ein Verfahren zur Blockiererkennung bei elektrisch kommutierten Elektromotoren anzugeben, das sich bei sämtlichen oben genannten Typen bzw. Bauformen elektrisch kommutierter Motoren einsetzten lässt.

Zur Lösung dieser Aufgabe wird gemäß der Erfindung ein Verfahren zur Erkennung eines Hinweises auf eine Blockierung bei einem 3-phasigen Schrittmotor durch Analyse der Motorbestromung vorgeschlagen, das die Verfahrensschritte gemäß Anspruch 1 aufweist. Einzelne Ausgestaltungen der Erfindung sind Gegenstand der Unteransprüche.

Die Erfindung ist insbesondere darin zu sehen, dass das Bestromungsschema und die Signaldetektion an den hier vorgeschlagenen Schrittmotortypen angepasst ist. Damit ist es möglich, das erfindungsgemäße Blockiererkennungsverfahren bei einem 3-phasigen Schrittmotor mit anderen als den in DE 196 53 460 C2 und US-B-6 285 156 beschriebenen Bestromungsformen anzuwenden. Ferner kann das erfindungsgemäße Verfahren auch bei einer PWM-Bestromung genutzt werden, um unter anderem Drehmomentanpassungen (beispielsweise versorgungsspannungsunabhängig) oder ein Mikrostepping-Verfahren nutzen zu können.

Nach der Erfindung ist vorgesehen, dass bei alternierenden Schwankungen der Längen der Zeitintervalle um mehr als eine vorgebbare Differenz auf einen ersten Hinweis auf eine mögliche Blockierung erkannt wird.

Weitere Merkmale der Erfindung und deren Vorteile lassen sich wie folgt zusammenfassen:
- Das Konzept kann im Gegensatz zu anderen auf dem Markt befindlichen Lösungen schaltungstechnisch sehr flächensparend auf einen IC umgesetzt werden, da es zum großen Teil digital (also "shrinkbar") realisiert ist.
- Es benötigt weder einen ADC noch einen Controller, sollten diese aber im IC oder System vorhanden sein, so können sie genutzt werden.
- Die Auswertung kann ganz oder zum Teil per Software, anstatt in diskreter Logik erfolgen.
- Das erfindungsgemäße Konzept ist im Gegensatz zu anderen auf dem Markt befindlichen Lösungen sehr tolerant gegenüber Umgebungs- und Motorparametern.
- Das erfindungsgemäße Konzept weist im Gegensatz zu anderen auf dem Markt befindlichen Lösungen deutlich zuverlässigere Eigenschaften auf.

Ferner sind gemäß diverser Ausführungsformen der Erfindung ein oder mehrere der nachfolgend genannten Merkmale vorgesehen, nämlich dass
a) Motortypen
   a.1)
      - die Realisierung für x-phasige, insbesondere 2-phasigen unipolare Schrittmotoren für
      - Common Node = neg. Versorgung,
      - Common Node = pos. Versorgung,
      - Common Node eines Spulenpaares an neg. Versorgung des anderen Spulenpaares an pos. Versorgung,
         (Es kann damit für unipolare Motoren und bipolare die gleiche Ansteuerschaltung genutzt werden, wobei diese Art der Ansteuerung auch ohne Blockiererkennung erfolgen kann, und zwar bei allen Bestromungstypen)
      - bei 1-Strang Block-Bestromung mit und ohne PWM,
      - bei 2-Strang Block-Bestromung mit und ohne PWM,
      - Halbschrittverfahren mit und ohne PWM
      - bei Mikrostepping mit PWM (Sinus, Trapez, andere Kurverformen),
      - bei Mikrostepping mit PWM mit Drehmoment und /oder Geschwindigkeitsregelung),
      erfolgt
   a.2)
      - die Realisierung für x-phasige, insbesondere 3-phasige Motoren in
      - Stern Schaltung,
      - Dreieck Schaltung (mit und ohne virtuellem Sternpunkt),
      - alle Bestromungstypen mit:
      - Block-Kommmutierung,
      - Mikrostepping mit PWM (Sinus, Trapez, andere Kurverformen),
      - Mikrostepping mit PWM (insbesondere für Raumvektormodulation),
      - Mikrostepping mit PWM mit Drehmoment und /oder Geschwindigkeitsregelung unabhängig v. d. Modulationsart(s.o.),
      erfolgt;
b) Referenz-Bildung
   b.1)
      - die Versorgung (positiv, negativ, GND) oder sonstige Referenzspannungen als Komparator-Referenz-Potential(e) oder als Basis zur Bildung der Referenzpotentiale dienen,
      - optional Mess- und Referenzpotentiale heruntergeteilt werden,
   b.2)
      - optional die Detektion von Spannungsabfällen über Treiber mittels kapazitiver Kopplung erfolgt und
      - optional eine kapazitive Spannungsteilung erfolgt;
   b.3) - das Referenzpotential dem x-fachen des Versorgungspotentiales entspricht,
   b.4) insbesondere in der Form, dass x als im Wesentlichen 2 gewählt ist,
   b.5) insbesondere in der Form, dass zu der Grund-Referenz noch ein positiver oder negativer Offset addiert wird,
   b.6) - die Referenzbildung im Betrieb, abhängig von Umgebungsparametern (wie z. B. Betriebsspannung, Temperatur, Motorsituation) dynamisch umschaltbar sind;
c) Vorverstärkung
   c.1) - optional das Signal vorverstärkt wird (üblicherweise analog);
   c.2)
      - die Vorverstärkung in analoger Technik ausgelegt ist oder
      - die Vorverstärkung in SC-Technik ausgelegt ist;
d) Komparator
   d.1) - der Komparator in analoger Technik ausgelegt ist oder
   d.2) - der Komparator in SC-Technik ausgelegt ist,
   d.3) - die Vorverstärkung und Komparator in einer gemeinsamen SC-Technik realisiert ist,
   d.4) - der Komparator mittels eines einzigen Transistors gegen eine Grundlast gebildet wird, wobei der Spannungsfehler durch die Transistor-Schwellspannung akzeptiert wird, insbesondere unter Ausnutzung vorhandener, zu diesem Zwecke modifizierter Strukturen zum Zwecke de ESD Schützen von Bauteilen,
   d.5) - gemäß d.4), jedoch mit einer Schaltung zu Kompensation des Spannungsfehlers
e) Klemmstruktur:
   e.1 - beim Erreichen der Referenz das Messsignal bei dieser Schwelle geklemmt wird,
   e.2) - bei Erreichen Referenz das Messsignal nicht geklemmt wird,
   e.3) - die Art der Klemm-Funktion im Betrieb auch dynamisch umschaltbar gestaltet sind,
   e.4) die Spannungsbegrenzung (Klemm) durch eine oder mehrere Dioden und/oder andere Halbleiter realisiert ist,
   e.5) - die Spannungsbegrenzung so realisiert ist, dass zunächst mit den zuvor unter d) beschriebenen Bauteilen eine Spannungsdetektion erfolgt, die als Folge einen Leistungstreiber aktiviert, welcher einen großen Teil der Stromlast trägt,
   e.6) - der Leistungstreiber zum Klemmen ein zur Motor Ansteuerung vorhandener Treiber ist,
   e.7) - der Leistungstreiber eigens zu diesem Zweck implementiert wird,
   e.8) - der Leistungstreiber ein zum Schutz der Baugruppe vorhandenes Bauelement ist; (z. B. ESD-Schutz-Transistor),
   e.9) - der Stromfluss durch diese Bauteile überwacht wird,
   e.10) - lediglich der Stromfluss an einem dieser Bauteile überwacht wird,
   e.11) - zur Spannungsüberwachung an einem oder mehreren Bauteilen an diesen Bauteilen eine zusätzliche Last (Stromquelle oder Widerstand) angeschlossen ist, welche im inaktiven Fall (Spannungsbegrenzung nicht aktiv) einen definierten Signalpegel sicherstellt;
f) Variante mit Zeitzähler (Baugruppe: Zeitzähler)
   f.1) - die Länge des Komparatorsignals durch einen Zeit-Zähler bestimmt wird,
   f.2) - der Zähler in Logik-Gattern ausgeführt ist,
   f.3) - eine TMU (Time-Measurement-Unit) zur Auszählung genutzt wird,
   f.4) - ein Controller/Prozessor direkt die Zeitzählung vornimmt,
   f.5) - der Zähler logarithmisch arbeitet, also mit zunehmender Zählzeit langsamer zählt (zur deutlichen Reduzierung der Zählergröße und Vereinfachung der nachfolgenden Auswertung),
   f.6) - die Logarithmierung in (der Applikation angepassten) groben Stufen erfolgt und somit kontrolliert fehlerbehaftet sein darf, um die Produktionskosten möglichst gering zu halten,
g) Variante mit Zeitzähler (Baugruppe: Auswertung und Filter)
   g.1) - eine Logik die Zeitzählungen auswertet und/oder filtert,
   g.2) - ein Controller/Prozessor die Zeitzählungen auswertet und/oder filtert,
   g.3) - die Auswertung und/oder Filterung per Software erfolgt,
   g.4) - die Software im System umprogrammiert werden kann (z.B. mittels FLASH),
h) Variante mit Direktwandlung durch ADC
   h.1) - die Spannungen ohne Komparator mittels ADC mit oder ohne Vorverstärkung digitalisiert werden,
   h.2) - der ADC durch eine Logik ausgewertet wird,
   h.3) - der ADC durch einen Controller oder Prozessor ausgewertet wird,
   h.4) - die Auswertung per Software erfolgt,
   h.5) - die Software umprogrammiert werden kann (z.B. mittels FLASH), um eine Anpassung an versch. Motortypen zu ermöglichen,
i) Bestimmung der Belastung des Motors
   i.1)
      - die wie dargestellt ermittelte Zeit der Umbestromungsphase kann nicht nur zur Analyse der Blockierung eines Motors, sondern auch zur Ermittlung der aktuellen Belastung des Motors, genutzt werden38),
      - das Wissen um die Last genutzt wird, um mittels PM-Beeinflussung die Bestromung des Motors auf das notwendige Maß anpassen (zur Reduktion von: Stromaufnahme, Störungen, Temperatur) oder erhöhen zu können (zur Verhinderung von Schrittverlusten bzw. Blockierungen),
   i.2) - das Wissen um die Last genutzt wird, um beim Beschleunigen und Bremsen des Motors maximales Drehmoment und maximale Dynamik zu erreichen,
   i.3) - das Wissen um die Last genutzt wird, um das Drehmoment des Motors gezielt und bedarfsgerecht in bestimmten Betriebssituationen zu reduzieren,
   i.4) - das Wissen um die Last genutzt wird, um die Abhängigkeit des Drehmomentes des Motors von der Versorgungsspannung zu kompensieren,
   i.5) - das Wissen um die Last genutzt wird, um die Abhängigkeit des Drehmomentes des Motors von der Temperatur zu kompensieren.

Bei einer weiteren vorteilhaften Ausgestaltung der Erfindung ist vorgesehen, dass die Ergebnisse der Auswertung der Längen der Zeitintervalle zur Unterdrückung des Einflusses von Störungen gefiltert werden.

In vorteilhafter Weiterbildung der Erfindung ist vorgesehen, dass die aktuelle Drehposition des Schrittmotors bzw. seines Ankers zum Zeitpunkt der Blockiererkennung ermittelt wird und/oder dass die Bestromung des Schrittmotors bei einer Blockiererkennung zur Reduktion von Geräuschbildung und/oder Minimierung einer mechanischen Überlast für den Schrittmotor, ein mit diesem in Wirkverbindung stehenden Getriebe und/oder anderen Komponenten beendet wird.

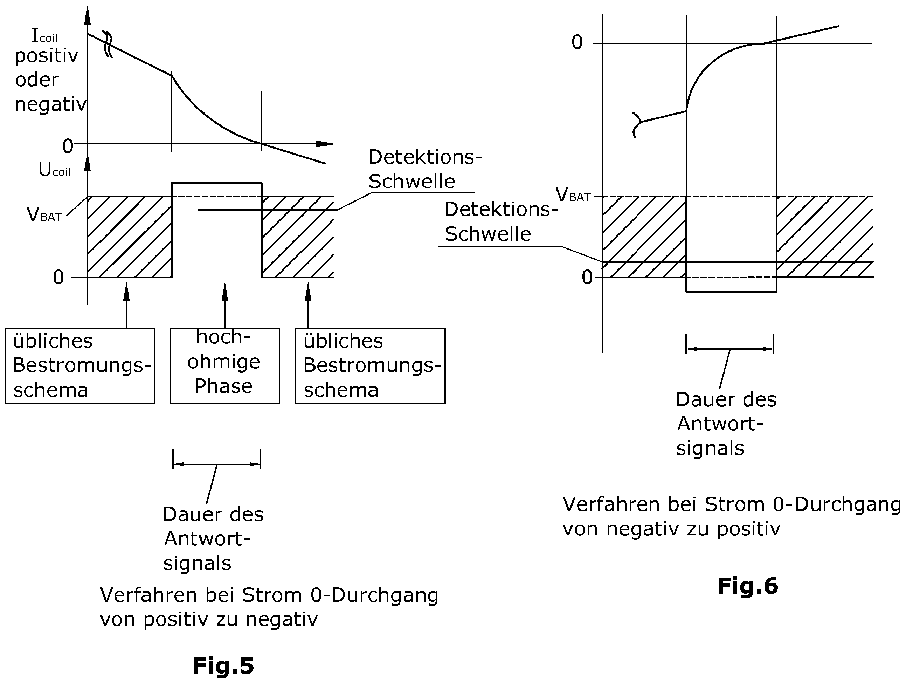

Bei einer weiteren vorteilhaften Ausgestaltung der Erfindung ist vorgesehen, dass der Übergang der Bestromung einer Motorwicklung zur Bestromung der Gegenmotorwicklung nicht zeitgleich, sondern mit einem vorgebbaren Timing behaftet, insbesondere bei PWM-Sinus/Trapez- etc.-Kommutierung mit einem vorgebbaren, auf den Nulldurchgang bezogenen Timing behaftet durchgeführt wird, und dass insbesondere zu einer bestimmten Zeit vor dem Nulldurchgang bei einem noch verbliebenem Reststrom von der für die Bestromungsvariante kennzeichnenden Kurvenform abweichend diese unterbrochen und der Motorwicklungsanschluss hochohmig geschaltet wird (ähnlich Fig. 5).

In vorteilhafter Weiterbildung der Erfindung ist vorgesehen, dass zur Erfassung der Antwortsignale ein Peak-Detektor die Spitze des Antwortsignals ermittelt und der Vergleich zur Ermittlung des Endes des Antwortsignals mit einer Schwelle erfolgt, die von der Peak-Spannung des Peak-Detektors abgängig ist und insbesondere in einem bestimmten Teilungsverhältnis zu dieser steht.

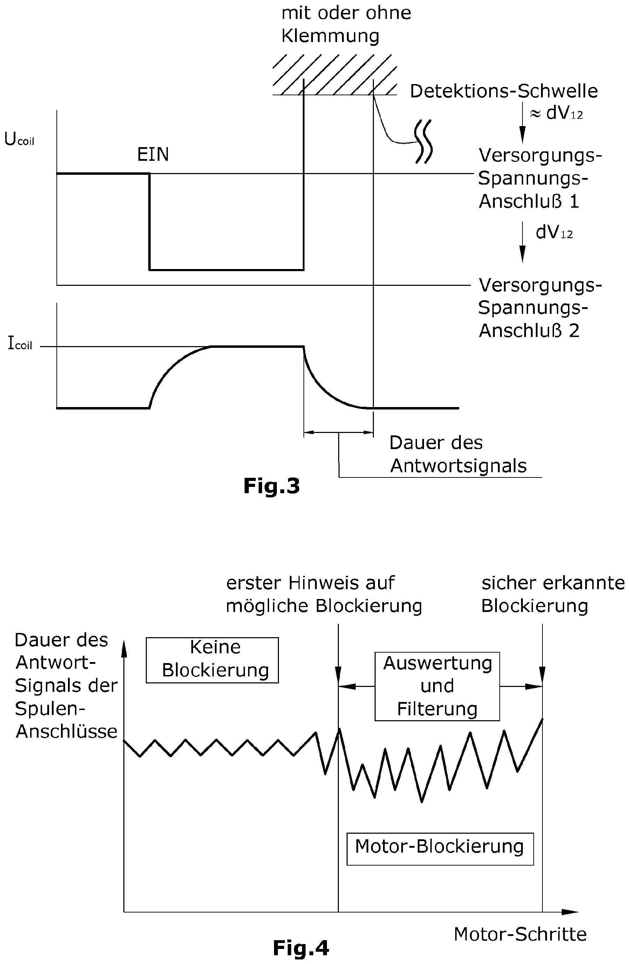

Bei einer weiteren vorteilhaften Ausgestaltung der Erfindung ist vorgesehen, dass bei der Erfassung der Antwortsignale beim Erreichen der Schwelle das Antwortsignal geklemmt und somit der rückgespeiste Strom gegen die Versorgungsspannung abgeleitet wird, gegen die die Schalter im eingeschalteten Zustand schalten (Fig. 3, siehe Anmerkung "mit und ohne Klemmung").

In vorteilhafter Weiterbildung der Erfindung ist vorgesehen, dass zur Erfassung der Antwortsignale die Schwelle und speziell bei unipolaren Schrittmotoren, bei Bedarf auch die Klemmeigenschaft im Betrieb, abgängig von Parametern (wie beispielsweise die Betriebsspannung, die Temperatur und die Motorsituation) dynamisch umschaltbar geschaltet ist/sind.

Bei einer weiteren vorteilhaften Ausgestaltung der Erfindung ist vorgesehen, dass zur kostensparenden Implementierung die Bestimmung der Dauer der Zeitintervalle mittels eines logarithmischen und daher kürzeren Zählers durchgeführt wird, wobei die nachfolgenden mathematischen Operationen in wiederum kostensparender Strich-Rechnung (Plus-/Minus-Rechnung) anstatt in Punktrechnung (Multiplikation/Division) durchgeführt werden kann.

In vorteilhafter Weiterbildung der Erfindung ist vorgesehen, dass die Erfassung des Antwortsignals mit einem ADC erfolgt, wobei die Aufgaben der Schwellwertbildung sowie die Ermittlung der Dauer des Antwortsignals, die Differenzbildungen sowie Filterfunktionen ganz oder teilweise in Logik bzw. mit Hilfe eines Controllers per Software durchgeführt werden können.

Bei einer weiteren vorteilhaften Ausgestaltung der Erfindung ist vorgesehen,
- dass beim ersten Auftreten von Abweichungen die momentanen Positionswerte (in Schritten oder Winkeln oder dergleichen) zwischengespeichert werden (Fig. 4),
- dass bei der späteren Detektion einer Blockierung oder anderen Lastbedingung auf diesen zwischengespeicherten Wert zurückgegriffen wird, um den durch die Ansprechverzögerung des Filters bedingten Fehler der Position zu kompensieren bzw. zu minimieren (Fig. 4),
- dass bei der späteren Detektion einer Blockierung oder anderen Lastbedingung optional ein fester oder variabler Korrekturwert zu dem zwischengespeicherten momentanen Positionswert addiert oder von diesem subtrahiert wird, um verbleibende Restfehler des Verfahrens zu minimieren, und
- dass bei der späteren Nicht-Detektion einer Blockierung die zwischengespeicherten Werte verworfen werden.

In vorteilhafter Weiterbildung der Erfindung ist vorgesehen, dass die Vermessung der Dauer der Zeitintervalle abhängig von der Betriebsbedingung entweder mit Beginn der Hochohmig-Schaltung startet oder mit der Erkennung des Beginns des Zeitintervalls.

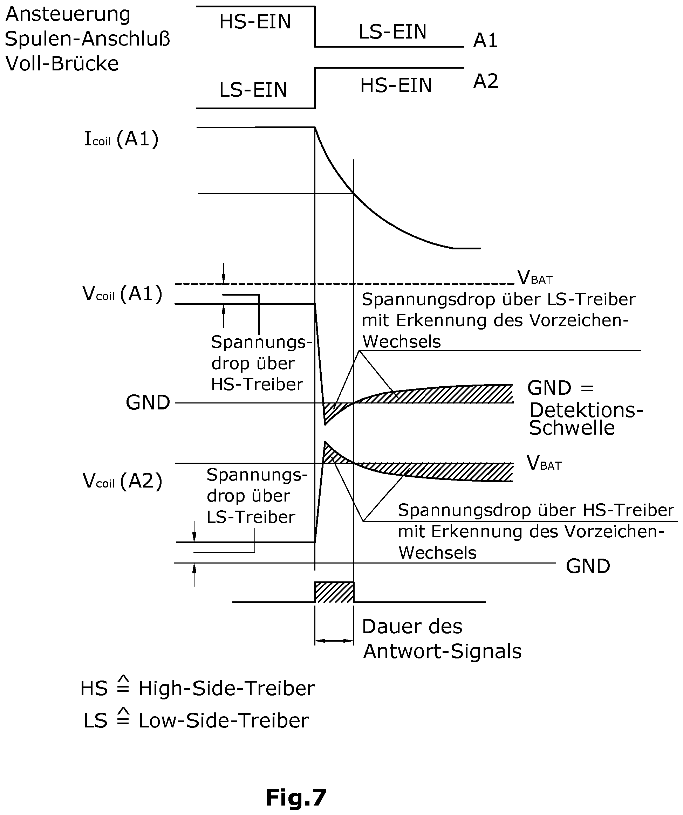

Eine weitere vorteilhafte Ausgestaltung der Erfindung ist, gekennzeichnet durch
- Wegfall des Hochohmig-Schaltens eines Wicklungsanschlusses,
- Überwachen der Polarität des Spannungsabfalls (ähnlich Fig. 7) über die Schalter und Ermittlung des Zeitpunktes des Wechsels der Polarität,
- Ermitteln der Dauer des Differenzzeitintervalls durch Ermitteln der Zeitdifferenz zwischen den Motor-Kommutierungen und den Zeitpunkten des Polaritätswechsels und
- Auswerten, wie in den zuvor genannten Ansprüchen beschrieben.

Die Erfindung wird nachfolgend anhand mehrerer Ausführungsbeispiele und unter Bezugnahme auf die Zeichnung näher erläutert. Im Einzelnen zeigen dabei:
- Fign. 1 bis 3: schematische Darstellungen und Signalverläufe zur Erläuterung des Verfahrens zur Blockiererkennung am Beispiel eines unipolaren Schrittmotors (kein Ausführungsbeispiel nach der Erfindung),
- Fig. 4: schematische Darstellung des (Antwort-)Signalverlaufs, anhand dessen unabhängig vom Motortyp eine Blockierung erkannt werden kann,
- Fign. 5 und 6: schematische Darstellungen und Signalverläufe zur Verdeutlichung des Verfahrens zur Blockiererkennung bei einem 3-phasigen Schrittmotor als ein Ausführungsbeispiel nach der Erfindung und
- Fig. 7: schematische Darstellungen und Signalverläufe zur Erläuterung des Verfahrens zur Blockiererkennung bei einem bipolaren Schrittmotor (kein Ausführungsbeispiel nach der Erfindung).

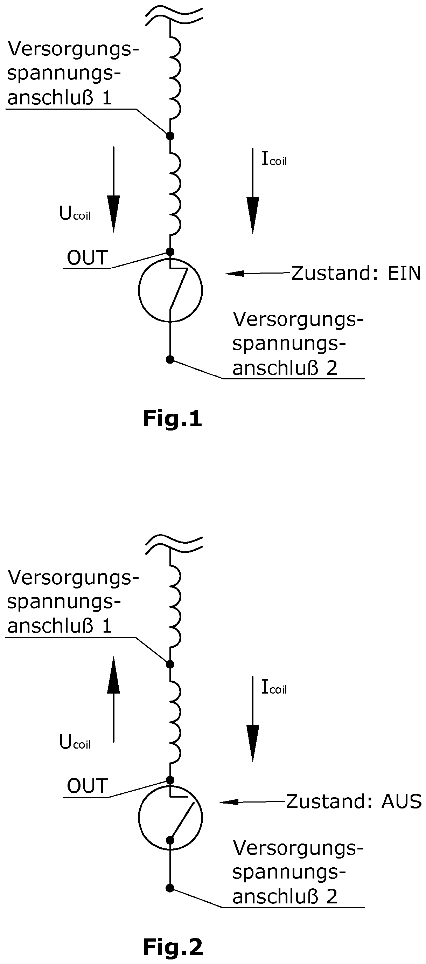

Beschreibung einer nicht erfindungsgemäßen Variante bei Nutzung für einen Unipolarmotor:
Um eine Blockierung eines Unipolarmotors erkennen zu können, wird erfindungsgemäß in der Kommutierungsphase der Wicklungsstrom überwacht. Fign. 1 und 2 zeigen die Verhältnisse in den beiden Zeitabschnitten einer Stromkommutierung.

In Fig. 1 ist gezeigt, dass ein Low-Side-Schalter eines Wicklungspaares (hier beispielhaft mit Mittelanzapfung) eines Unipolar-Motors einen Strom von einem Versorgungsspannungsanschluss 1 (hier beispielhaft VBAT) zum anderen Versorgungsspannungsanschluss 2 (hier beispielhaft GND) durch die Wicklung treibt.

Die Auswertephase des Verfahrens beginnt im zweiten Zeitabschnitt (siehe Fig. 2), wenn der Schalter bzw. Transistor, welcher den Wicklungsanschluss gegen Versorgungsspannungsanschluss 2 (hier beispielhaft GND) schaltet, ausgeschaltet wird.

In dieser Phase bleibt der Wicklungsstrom auf Grund der Induktivität der Motorwicklung zunächst konstant. Als Folge davon springt die Spannung am Wicklungsanschluss (hier OUT) nicht nur bis zum Potential des Versorgungsspannungsanschluss 1 (hier beispielhaft VBAT), sondern darüber hinaus. Der Endwert der Spannung des Wicklungsanschlusses (hier OUT) ist abhängig von der Höhe des vormals durch die Wicklung geflossenen Stromes und der Drehbewegung des Motors, wird aber zusätzlich durch andere Bedingungen des Systems, z. B. Klemmbedingung durch optionale Zehnerdioden, limitiert. Üblicherweise erreicht der Überschwinger aber eine Höhe von mindestens der Spannungsdifferenz zwischen Versorgungsspannungsanschluss 1 (hier beispielhaft VBAT) zum anderen Versorgungsspannungsanschluss 2 (hier beispielhaft GND).

Da der Spannungsabfall über der Induktivität bzw. über der Motorwicklung sein Vorzeichen umgekehrt, wenn der zweite Zeitabschnitt erreicht ist, beginnt der Wicklungsstrom abzunehmen. Die Fign. 3 und 4 zeigen vereinfachte Zeitdiagramme (Spannungs- und Stromverläufe) während des Kommutierungsprozesses.

Sobald der Wicklungsstrom verschwunden ist (0 Ampere), führt das dazu, dass die Spannung an OUT in Richtung Versorgungsspannungsanschluss 1 (hier beispielhaft VBAT) strebt.

Dieser Zustand wird detektiert, indem die Spannung an OUT beobachtet wird und die Dauer erfasst wird, für die die Spannung an OUT gleich oder mindestens gleich einer Referenzspannung, üblicherweise ca. 2* die Spannung an Versorgungsspannungsanschluss 1, ist.

Dabei ist die Genauigkeit der Schwelle relativ unbedeutend. Sie sollte aber nicht zu weit unter 2*VBAT bzw. 2* der Spannung am Versorgungsanschluss 1 liegen, da darunter die Rückspeisespannungen des offenen Wicklungsanschlusses durch den generatorischen Effekt der Motore liegt.

Läge die Schwelle in diesem Bereich, würde der generatorischen Effekt die Erkennung von I=0A überlagern und damit das Verfahren recht unsicher. Die Dauer der Rückspeisung wird an eine Auswerteeinheit übertragen. Um eine Blockierung erkennen zu können, muss die Auswerteeinheit die Veränderung dieser Perioden bewerten.

Ein freilaufender, d. h. nicht blockierter Motor erzeugt vergleichsweise konstante Werte für die Zeitspannen, für die die Spannung an OUT gleich oder mindestens gleich einer Referenzspannung, üblicherweise das 2-fache der Spannung an Versorgungsspannungsanschluss 1, ist. Sobald der Motor blockiert ist, zeigt die Sequenz von Perioden eine signifikante Veränderung (siehe Fig. 4), da die Motorwicklungen durch die Blockierbedingung beeinflusst werden.

Schwellen, Dauermessungen und Auswertungen können mit Komparatoren plus Digitaltechnik incl. Mikrokontrollern und Software realisiert werden, es ist aber genauso möglich, die Spannungen der Wicklungsanschlüsse mit einem ADC zu erfassen und Schwellen, Dauermessungen und Auswertungen mit Digitaltechnik und/oder Mikrokontrollern und Software zu realisieren.

Die Fig. 5 zeigt schematisch die Signalverläufe bei Anwendung des erfindungsgemäßen Verfahrens auf einen 3-phasigen Schrittmotor. Fig. 6 betrifft ebenfalls einen erfindungsgemäßen Anwendungsfall.

Schließlich repräsentieren die Signalverläufe der Fig. 7 die nicht erfindungsgemäße Anwendung des Verfahrens bei einem bipolaren Schrittmotor.

## Patentansprüche

1. Verfahren zur Erkennung eines Hinweises auf eine mögliche Blockierung bei einem 3-phasigen Schrittmotor durch Analyse der Motorbestromung, mit den folgenden Verfahrensschritten:
- Einprägen eines Betriebsstroms gemäß einer Bestromungsvariante für den Betrieb des 3-phasigen Schrittmotors in dessen eine oder mehrere, entweder als Sternschaltung oder als Dreieckschaltung mit virtuellem oder ohne virtuellen Sternpunkt vorliegenden Motorwicklungen mittels einer Schalter-Halbbrückenschaltung pro Motorwicklungsanschluss, durch welche der Motorwicklungsanschluss wechselweise mit einem von zwei Versorgungsspannungsanschlüssen der Motorwicklung verbunden wird,
- Kommutieren der Motorwicklungen durch Pulsweitenmodulation einer Sinus- oder Trapezkurvenform des Betriebsstromverlaufs,
- wobei die Bestromungsvariante derart modifiziert wird, dass kurz vor einem Nulldurchgang des Stroms, also bei einem noch verbleibenden Reststrom, an einen Motorwicklungsanschluss dieser für eine bestimmte Zeitdauer, mindestens jedoch bis zum Ende des nachfolgend erwähnten Zeitintervalls, hochohmig geschaltet wird,
- Erfassen der Spannung an dem hochohmig geschalteten Motorwicklungsanschluss zumindest für die hochohmig geschaltete Zeitdauer und Vergleichen dieser Spannung mit einem Schwellwert, der je nach Polarität der Spannung in der Nähe der Größe der Spannung an dem einen oder dem anderen der beiden Versorgungsspannungsanschlüsse liegt,
- Erfassen der Zeitdauer ab dem Hochohmigschalten des Motorwicklungsanschlusses, bis sich der Reststrom auf Null abgebaut hat, durch Erfassen des Zeitintervalls, für das die Spannung an dem hochohmig geschalteten Motorwicklungsanschluss den Schwellwert kreuzt,
- Vergleichen der Länge der Intervalle für mehrere jeweils hochohmig geschaltete Motorwicklungsanschlüsse und
- Erkennen einer möglichen Blockierung anhand der Vergleiche der Längen der Intervalle, indem alternierende Schwankungen der Längen der Zeitintervalle um mehr als eine vorgebbare Differenz als Hinweis auf eine mögliche Blockierung erkannt werden.

2. Verfahren nach Anspruch 1, **dadurch gekennzeichnet, dass** die Ergebnisse der Auswertung der Längen der Zeitintervalle zur Unterdrückung des Einflusses von Störungen gefiltert werden.

3. Verfahren nach Anspruch 1 oder 2, **dadurch gekennzeichnet, dass** die aktuelle Drehposition des Schrittmotors bzw. seines Ankers zum Zeitpunkt der Blockiererkennung ermittelt wird und/oder dass die Bestromung des Schrittmotors bei einer Blockiererkennung zur Reduktion von Geräuschbildung und/oder Minimierung einer mechanischen Überlast für den Schrittmotor, ein mit diesem in Wirkverbindung stehenden Getriebe und/oder anderen Komponenten beendet wird.

4. Verfahren nach einem der Ansprüche 1 bis 3, **dadurch gekennzeichnet, dass** zur Erfassung der Antwortsignale ein Peak-Detektor die Spitze des Antwortsignals ermittelt und der Vergleich zur Ermittlung des Endes des Antwortsignals mit einer Schwelle erfolgt, die von der Peak-Spannung des Peak-Detektors abgängig ist und insbesondere in einem bestimmten Teilungsverhältnis zu dieser steht.

5. Verfahren nach einem der Ansprüche 1 bis 4, **dadurch gekennzeichnet, dass** zur Erfassung der Antwortsignale die Schwelle und, speziell bei unipolaren Schrittmotoren, bei Bedarf auch die Klemmeigenschaft im Betrieb, abgängig von Parametern dynamisch umschaltbar geschaltet ist/sind.

6. Verfahren nach Anspruch 5, **dadurch gekennzeichnet, dass** es sich bei den Betriebsparametern um die Betriebsspannung, die Temperatur und die Motorsituation handelt.

7. Verfahren nach einem der Ansprüche 1 bis 6, **dadurch gekennzeichnet, dass** zur kostensparenden Implementierung die Bestimmung der Dauer der Zeitintervalle mittels eines logarithmischen und daher kürzeren Zählers durchgeführt wird, wobei die nachfolgenden mathematischen Operationen in wiederum kostensparender Strich-Rechnung, d.h. Plus-/Minus-Rechnung, anstatt in Punktrechnung, d.h. Multiplikation/Division, durchgeführt werden kann.

8. Verfahren nach einem der Ansprüche 1 bis 7, **dadurch gekennzeichnet, dass** die Erfassung des Antwortsignals mit einem ADC erfolgt, wobei die Aufgaben der Schwellwertbildung sowie die Ermittlung der Dauer des Antwortsignals, die Differenzbildungen sowie Filterfunktionen ganz oder teilweise in Logik bzw. mit Hilfe eines Controllers per Software durchgeführt werden.

9. Verfahren nach einem der Ansprüche 1 bis 8, **dadurch gekennzeichnet,**
- **dass** beim ersten Auftreten von Abweichungen die momentanen Positionswerte zwischengespeichert werden,
- **dass** bei der späteren Detektion einer Blockierung oder anderen Lastbedingung auf diesen zwischengespeicherten Wert zurückgegriffen wird, um den durch die Ansprechverzögerung des Filters bedingten Fehler der Position zu kompensieren bzw. zu minimieren,
- **dass** bei der späteren Detektion einer Blockierung oder anderen Lastbedingung optional ein fester oder variabler Korrekturwert zu dem zwischengespeicherten momentanen Positionswert addiert oder von diesem subtrahiert wird, um verbleibende Restfehler des Verfahrens zu minimieren, und
- **dass** bei der späteren Nicht-Detektion einer Blockierung die zwischengespeicherten Werte verworfen werden.

10. Verfahren nach einem der Ansprüche 1 bis 9, **dadurch gekennzeichnet, dass** die Vermessung der Dauer der Zeitintervalle abhängig von der Betriebsbedingung entweder mit Beginn der Hochohmig-Schaltung startet oder mit der Erkennung des Beginns des Zeitintervalls.

11. Verfahren nach einem der Ansprüche 1 bis 10, **gekennzeichnet durch**
- Wegfall des Hochohmig-Schaltens eines Wicklungsanschlusses,
- Überwachen der Polarität des Spannungsabfalls über die Schalter und Ermittlung des Zeitpunktes des Wechsels der Polarität,
- Ermitteln der Dauer des Differenzzeitintervalls durch Ermitteln der Zeitdifferenz zwischen den Motor-Kommutierungen und den Zeitpunkten des Polaritätswechsels und
- Auswerten, wie in den zuvor genannten Ansprüchen beschrieben.

12. Verwendung des Verfahrens nach einem der vorhergehenden Ansprüche zur Zeitoptimierung von Initialisierungsläufen des Schrittmotors oder einer den Schrittmotor aufweisenden Einheit mit Verdrehen der Schrittmotorwelle oder eines mit diesem in Wirkverbindung stehenden Stellglieds gegen einen Anschlag und/oder zur Nutzung der Zeitintervallermittlungen zur Beeinflussung der Schrittmotoransteuerung insbesondere hinsichtlich Motorgeschwindigkeit und/oder Drehmoment.

## Claims

1. A method for detecting an indication of a possible blockage of a three-phase stepper motor by analyzing the motor current supply, comprising the following method steps:
- impressing an operating current according to a current supply variant for the operation of the three-phase stepper motor into the one or more motor windings thereof which are either in star connection or in delta connection with virtual star point or without virtual star point by means of one switch half-bridge circuit per motor winding terminal, wherein the switch half-bridge circuit connects the motor winding terminal alternately to one of two supply voltage terminals of the motor winding,
- commutating the motor windings by means of pulse width modulation of a sinusoidal or trapezoidal waveform of the operating current course,
- wherein the current supply variant is modified such that shortly before a zero crossing of the current, i.e. with a residual current still remaining, at a motor winding terminal the latter is switched to high impedance for a specific period of time, but at least until the end of the time interval mentioned below,
- detecting the voltage at a motor winding terminal switched to high impedance at least for the high-impedance time period and comparing said voltage to a threshold that is near the magnitude of the voltage at the one or the other of the two supply voltage terminals depending on the polarity of the voltage,
- detecting the time period from when the motor winding terminal is switched to high impedance until the residual current is reduced to zero, by detecting the time interval for which the voltage at the motor winding terminal switched to high impedance crosses the threshold value,
- comparing the length of the intervals for a plurality of motor winding terminals each switched to high impedance, and
- detecting a possible blockage based on the comparisons of the lengths of the intervals by detecting alternating variations of the lengths of the time intervals by more than a predeterminable difference as an indication for a possible blockage.

2. The method according to claim 1, **characterized in that** the results of the evaluation of the lengths of the time intervals are filtered to suppress the influence of interferences.

3. The method according to claim 1 or 2, **characterized in that** the present rotational position of the stepper motor and the armature thereof, respectively, is determined at the point of time when the blockage is detected, and/or that the current supply of the stepper motor is stopped when a blockage is detected to reduce generation of noise and/or to minimize a mechanical overload of the stepper motor, a gearbox operatively connected to said motor and/or other components.

4. The method according to any one of claims 1 to 3, **characterized in that** for detecting the response signals a peak detector determines the peak of the response signal and the comparison for determining the end of the response signal is carried out using a threshold which depends on the peak voltage of the peak detector and in particular shows a specific division ratio to said voltage.

5. The method according to any one of claims 1 to 4, **characterized in that** for detection of the response signals the threshold and, in particular in unipolar stepper motors, the clamping characteristic during operation, if necessary, is/are connected such that it/they is/are adapted to be dynamically switched depending on operating parameters.

6. The method according to claim 5, **characterized in that** the operating parameters are the operating voltage, the temperature and the motor situation.

7. The method according to any one of claims 1 to 6, **characterized in that** for the purpose of cost-saving implementation the determination of the duration of the time intervals is carried out by means of a logarithmic and thus shorter counter, wherein the subsequent mathematical operations can be carried out via cost-saving addition/subtraction, i.e. plus and/or minus calculation, instead of multiplied by/divided by calculation, i.e. multiplication and/or division.

8. The method according to any one of claims 1 to 7, **characterized in that** the detection of the response signal is carried out by an ADC, wherein the tasks of threshold value generation as well as the determination of the duration of the response signal, the difference generations as well as filter functions can be fully or partly carried out through a logic and/or with the aid of a controller through a software.

9. The method according to any one of claims 1 to 8, **characterized in**
- **that**, when deviations occur for the first time, the momentary position values are buffered,
- **that** during later detection of a blockage or another load condition this buffered value is used to compensate for or to minimize the position error caused by the response delay of the filter,
- **that** during later detection of a blockage or another load condition optionally a fixed or a variable correction value is added to the buffered momentary position value or subtracted from said value to minimize remaining residual errors of the process, and
- **that** during later non-detection of a blockage the buffered values are discarded.

10. The method according to any one of claims 1 to 9, **characterized in that** the measurement of the duration of the time intervals starts either at the beginning of switching to high impedance or at the time of detection of the beginning of the time interval, depending on the operating condition.

11. The method according to any one of claims 1 to 10, **characterized by**
- omission of switching to high impedance of a winding terminal,
- monitoring of the polarity of the voltage drop across the switches and determination of the point of time of the polarity reversal,
- determination of the duration of the difference time interval by determining the time difference between the motor commutations and the points of time of the polarity reversal, and
- evaluation as described in the claims above.

12. Use of the method according to any one of the preceding claims for time optimizing of initialization processes of the stepper motor or a unit provided with said stepper motor, comprising turning the stepper motor shaft or an actuator operatively connected to said motor against a limit stop, and/or for using the detected time intervals for influencing the stepper motor control, in particular with regard to motor speed and/or torque.

## Revendications

1. Procédé de reconnaissance d'une indication d'un possible blocage sur un moteur pas-à-pas triphasé par analyse de l'alimentation du moteur, avec les étapes de procédé suivantes :
- appliquer un courant de fonctionnement selon une variante d'alimentation pour le fonctionnement du moteur pas-à-pas triphasé dans un ou plusieurs de ses enroulements de moteur montés soit en étoile, soit en triangle avec ou sans point de référence virtuel, au moyen d'un circuit en demi-pont de commutation à raison d'un circuit par raccord d'enroulement de moteur, le raccord d'enroulement de moteur étant relié en alternance par le circuit à l'un de deux raccords de tension d'alimentation de l'enroulement de moteur,
- commuter les enroulements du moteur par modulation de largeur d'impulsion d'une forme d'onde sinusoïdale ou trapézoïdale de l'allure du courant de fonctionnement,
- la variante d'alimentation étant modifiée de telle sorte que peu avant un passage par zéro du courant, donc lorsqu'il existe encore un courant résiduel, à un raccord d'enroulement de moteur, celui-ci est commuté sur une haute résistance pendant une durée déterminée, mais au moins jusqu'à la fin de l'intervalle de temps mentionné ci-dessous,
- saisir la tension au raccord d'enroulement de moteur commuté sur une valeur ohmique élevée au moins pendant la durée de l'état commuté sur valeur ohmique élevée, et comparer cette tension à une valeur seuil qui, selon la polarité de la tension, est proche de la valeur de la tension à l'un ou l'autre des deux raccords de tension d'alimentation,
- saisir la durée depuis la commutation sur valeur ohmique élevée du raccord d'enroulement de moteur jusqu'à ce que le courant résiduel s'annule, par saisie de l'intervalle de temps pendant lequel la tension au raccord d'enroulement de moteur commuté sur valeur ohmique élevée franchit la valeur seuil,
- comparer la longueur des intervalles pour chacun de plusieurs raccords d'enroulement de moteur commutés sur valeur ohmique élevée et
- reconnaître un possible blocage à l'aide des comparaisons des longueurs des intervalles, des fluctuations alternantes des longueurs des intervalles de temps pouvant être reconnues comme indication d'un possible blocage lorsqu'elles sont supérieures à une différence pré-définissable.

2. Procédé selon la revendication 1, **caractérisé en ce qu'**on filtre les résultats de l'évaluation des longueurs des intervalles de temps pour supprimer l'influence de perturbations.

3. Procédé selon la revendication 1 ou 2, **caractérisé en ce qu'**on détermine la position de rotation actuelle du moteur pas-à-pas ou de son armature au moment de la reconnaissance du blocage et/ou **en ce qu'**on met fin à l'alimentation du moteur pas-à-pas en cas de reconnaissance de blocage pour réduire la génération de bruit et/ou minimiser une surcharge mécanique pour le moteur pas-à-pas, pour une transmission en liaison opérante avec celui-ci et/ou pour d'autres composants.

4. Procédé selon l'une des revendications 1 à 3, **caractérisé en ce que**, pour saisir les signaux de réponse, un détecteur de crête détermine la crête du signal de réponse et la comparaison destinée à déterminer la fin du signal de réponse s'effectue avec un seuil qui dépend de la tension de crête du détecteur de crête et est en particulier dans un rapport de division déterminé par rapport à celle-ci.

5. Procédé selon l'une des revendications 1 à 4, **caractérisé en ce que**, pour la détection des signaux de réponse, le seuil et, en particulier dans le cas de moteurs pas-à-pas unipolaires, au besoin également la propriété d'écrêtage en fonctionnement, est/sont commuté(s) de manière dynamique pendant le fonctionnement, en fonction de paramètres.

6. Procédé selon la revendication 5, **caractérisé en ce que** les paramètres opérationnels sont la tension de fonctionnement, la température et la situation du moteur.

7. Procédé selon l'une des revendications 1 à 6, **caractérisé en ce que**, pour une mise en œuvre économique, la détermination de la durée des intervalles de temps est effectuée au moyen d'un numérateur logarithmique et donc plus court, dans lequel les opérations mathématiques ultérieures peuvent être effectuées dans un calcul addition/soustraction, également économique, au lieu d'un calcul multiplication/division.

8. Procédé selon l'une des revendications 1 à 7, **caractérisé en ce que** la saisie du signal de réponse est réalisée avec un convertisseur analogique-numérique, les tâches de formation de valeur seuil ainsi que la détermination de la durée du signal de réponse, les formations de différence ainsi que les fonctions de filtrage étant réalisées entièrement ou partiellement en logique ou à l'aide d'un contrôleur par logiciel.

9. Procédé selon l'une des revendications 1 à 8, **caractérisé en ce que**
- lors de la première apparition d'écarts, on met en mémoire tampon les valeurs momentanées de position,
- **en ce que**, lors de la détection ultérieure d'un blocage ou autre condition de charge, on se réfère à cette valeur mise en mémoire tampon afin de compenser ou minimiser l'erreur de position causée par le retard de réponse du filtre,
- **en ce que** facultativement, lors de la détection ultérieure d'un blocage ou autre condition de charge, on ajoute ou retranche une valeur de correction fixe ou variable à la valeur momentanée de position mise en mémoire tampon, afin de minimiser les erreurs résiduelles restantes du procédé, et
- **en ce qu'**en cas de non-détection ultérieure d'un blocage, on supprime les valeurs mises en mémoire tampon.

10. Procédé selon l'une des revendications 1 à 9, **caractérisé en ce que** la mesure de la durée des intervalles de temps commence, en fonction de la condition de fonctionnement, soit par le démarrage du circuit à valeur ohmique élevée, soit par la reconnaissance du début de l'intervalle de temps.

11. Procédé selon l'une des revendications 1 à 10, **caractérisé par**
- mettre fin à la commutation à valeur ohmique élevée d'un raccord d'enroulement,
- surveiller la polarité de la chute de tension aux bornes du commutateur et déterminer l'instant du changement de polarité,
- déterminer la durée de l'intervalle de temps de différence en déterminant la différence de temps entre les commutations du moteur et les instants du changement de polarité, et
- évaluer comme décrit dans les revendications précitées.

12. Utilisation du procédé selon l'une des revendications précédentes pour l'optimisation temporelle d'initialisations du moteur pas-à-pas, ou d'une unité comprenant le moteur pas-à-pas, en faisant tourner l'arbre du moteur pas-à-pas ou d'un actionneur en liaison opérante avec celui-ci contre une butée et/ou pour utiliser les déterminations d'intervalles de temps pour influencer la commande du moteur pas-à-pas, en particulier en ce qui concerne la vitesse du moteur et/ou le couple.
